(19) **Europäisches Patentamt / European Patent Office / Office européen des brevets**

(11) **EP 4 693 959 A1**

(12) **EUROPEAN PATENT APPLICATION**
published in accordance with Art. 153(4) EPC

(43) Date of publication:
**11.02.2026 Bulletin 2026/07**

(21) Application number: **24795815.0**

(22) Date of filing: **08.04.2024**

(51) International Patent Classification (IPC):
*H04B 17/11* (2015.01)

(52) Cooperative Patent Classification (CPC):
**H04B 17/11; H04B 17/12; H04B 17/21**

(86) International application number:
**PCT/CN2024/086538**

(87) International publication number:
**WO 2024/222434 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.04.2023 CN 202310489386**

(71) Applicant: **Huawei Technologies Co., Ltd.
Shenzhen, Guangdong 518129 (CN)**

(72) Inventors:
• **GAO, Hancong**
  **Shenzhen, Guangdong 518129 (CN)**
• **XUE, Huaijie**
  **Shenzhen, Guangdong 518129 (CN)**
• **CUI, Yuke**
  **Shenzhen, Guangdong 518129 (CN)**
• **GONG, Zhengwei**
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **CORRECTION METHOD AND APPARATUS, AND STORAGE MEDIUM**

(57) This application provides a correction method, an apparatus, and a storage medium, and may be applied to a communication apparatus. The method includes: correcting, based on first information obtained by a correction circuit, M radio frequency channels deployed in a communication apparatus, where M is an integer greater than 1; and correcting the M radio frequency channels based on second information obtained through air interface transmission, to improve correction effects of each radio frequency channel.

300

Network device

Terminal device

S310: Correct M radio frequency channels based on first information obtained by a correction circuit

S320: Correct the M radio frequency channels based on second information obtained through air interface transmission

FIG. 3

EP 4 693 959 A1

**Description**

This application claims priority to Chinese Patent Application No. 202310489386.6, filed with the China National Intellectual Property Administration on April 28, 2023 and entitled "CORRECTION METHOD, APPARATUS, AND STORAGE MEDIUM", which is incorporated herein by reference in its entirety.

**TECHNICAL FIELD**

This application relates to the field of communication technologies, and in particular, to a correction method, an apparatus, and a storage medium.

**BACKGROUND**

In some communication systems, discrepancies in amplitudes, phases, frequencies, and delays of radio frequency channels arise from factors such as components variations (for example, printed circuit board (printed circuit board, PCB) layout and cabling) of radio frequency channels and ambient temperatures within a communication apparatus, thereby reducing consistency between the radio frequency channels. Therefore, quality of signals transmitted on the channels deteriorates, compromising communication quality.

**SUMMARY**

Embodiments of this application provide a communication method, an apparatus, and a storage medium, to accurately correct each radio frequency channel and avoid performance degradation in a communication network caused by inconsistency between radio frequency channels.

According to a first aspect, an embodiment of this application provides a correction method. The method may be performed by a communication apparatus, and the communication apparatus may be a network device or a component in the network device.

In this embodiment of this application, the network device corrects, based on first information obtained by a correction circuit, M radio frequency channels deployed in the communication apparatus, where M is an integer greater than 1; and corrects the M radio frequency channels based on second information obtained through air interface transmission, to implement accurate correction of each radio frequency channel.

Optionally, the correction is used for transmission of user-level information, or the correction may be used for transmission of cell-level information. When the correction is used for transmission of the cell-level information, the communication apparatus supports single-beam communication.

The user-level information may include data information and reference information.

The cell-level information may include broadcast-level information, and the broadcast-level information may include a reference signal.

In a possible implementation, the correcting the M radio frequency channels based on second information obtained through air interface transmission includes: when a value of a second quality parameter is greater than or equal to a value of a first quality parameter, correcting the M radio frequency channels based on the second information obtained through the air interface transmission, where the first quality parameter is a quality parameter obtained by correcting the M radio frequency channels based on the first information, and the second quality parameter is a quality parameter obtained by correcting the M radio frequency channels based on the second information. According to the correction method provided in this implementation, it can be ensured that correction performed based on the first information and the second information has relatively high correction precision.

In a possible implementation, a difference obtained by subtracting the value of the first quality parameter from the value of the second quality parameter is greater than or equal to a first threshold. In this case, the following problem can be avoided: Correction precision is relatively low because correction is performed based on the first information and the second information when the value of the second quality parameter does not accurately reflect correction precision of a terminal device.

In a possible implementation, the correcting the M radio frequency channels based on second information obtained through air interface transmission includes: when a value of a second quality parameter is greater than or equal to a second threshold, correcting the M radio frequency channels based on the second information obtained through the air interface transmission, where the second quality parameter is a quality parameter obtained by correcting the M radio frequency channels based on the second information. In this case, determining is not performed with reference to a first quality parameter, so that processing efficiency is improved while communication quality is ensured.

In a possible implementation, the correcting the M radio frequency channels based on second information obtained through air interface transmission includes: after the correcting the M radio frequency channels based on the first information, correcting the M radio frequency channels based on the second information.

Optionally, the correction includes correcting information transmitted by the M radio frequency channels in at least one of the following dimensions: frequency, phase, delay, or signal amplitude.

In a possible implementation, the method further includes: sending first reference information, where the first reference information is reference information for correction based on the first information; and receiving the second information, where the second information includes a precoding matrix indicator. In this case, the second information may accurately reflect channel quality outside a measurement range of the correction circuit, to supplement the first information, and further implement accurate correction of the M radio frequency channels.

According to a second aspect, an embodiment of this application provides a correction method, including: correcting M radio frequency channels based on first information obtained by a correction circuit; and determining, based on a first condition, whether to correct the M radio frequency channels based on second information obtained through air interface transmission.

The first condition may include at least one of the following:

the correction is used for transmission of user-level information;
the correction is used for transmission of cell-level information, and a communication apparatus supports single-beam communication;
a value of a second quality parameter is greater than or equal to a value of a first quality parameter;
a difference obtained by subtracting the value of the first quality parameter from the value of the second quality parameter is greater than or equal to a first threshold; and
the value of the second quality parameter is greater than or equal to a second threshold.

According to a third aspect, an embodiment of this application provides a correction method, including: determining, based on a second condition, whether to correct M radio frequency channels based on first information obtained by a correction circuit; and determining, based on a third condition, whether to correct the M radio frequency channels based on second information obtained through air interface transmission.

The second condition includes at least one of the following:

the correction is used for transmission of cell-level information in a multi-beam scenario;
a value of a second quality parameter is less than a value of a first quality parameter;
the value of the second quality parameter is greater than or equal to the value of the first quality parameter, and a difference obtained by subtracting the value of the first quality parameter from the value of the second quality parameter is less than a first threshold; and
the value of the second quality parameter is less than a second threshold.

The third condition includes at least one of the following:

the correction is used for transmission of user-level information;
the correction is used for transmission of cell-level information, and a communication apparatus supports single-beam communication;
a value of a second quality parameter is greater than or equal to a value of a first quality parameter;
a difference obtained by subtracting the value of the first quality parameter from the value of the second quality parameter is greater than or equal to a first threshold; and
the value of the second quality parameter is greater than or equal to a second threshold.

According to a fourth aspect, an embodiment of this application provides a communication apparatus, including: a first correction unit, configured to correct M radio frequency channels based on first information obtained by a correction circuit; and a second correction unit, configured to correct the M radio frequency channels based on second information obtained through air interface transmission, where the M radio frequency channels are deployed in the communication apparatus, and M is an integer greater than 1.

In a possible implementation, the correction is used for transmission of user-level information.

In a possible implementation, the user-level information includes data information and reference information.

In a possible implementation, the correction is used for transmission of cell-level information, and the communication apparatus supports single-beam communication.

In a possible implementation, the cell-level information includes broadcast-level information, and the broadcast-level information includes a reference signal.

In a possible implementation, the second correction unit is specifically configured to: when a value of a second quality parameter is greater than or equal to a value of a first quality parameter, correct the M radio frequency channels based on the second information obtained through the air interface transmission, where the first quality parameter is a quality parameter obtained by correcting the M radio frequency channels based on the first information, and the second quality parameter is a quality parameter obtained by correcting the M radio frequency channels based on the second information.

In a possible implementation, a difference obtained by subtracting the value of the first quality parameter from the value of the second quality parameter is greater than or equal to a first threshold.

In a possible implementation, the second correction unit is specifically configured to: when a value of a second quality parameter is greater than or equal to a second threshold, correct the M radio frequency channels based on the second information obtained through the air interface transmission, where the second quality parameter is a quality parameter obtained by correcting the M radio frequency channels based on the second information.

In a possible implementation, the second correction unit is specifically configured to: after the M radio frequency channels are corrected based on the first information, correct the M radio frequency channels based on the second information.

In a possible implementation, the correction includes correcting information transmitted by the M radio frequency channels in at least one of the following dimensions: frequency, phase, delay, or signal amplitude.

In a possible implementation, the apparatus further includes: a transceiver unit, configured to send first reference information, where the first reference information is reference information for correction based on the first information. The transceiver unit is further configured to receive the second information, where the second information includes a precoding matrix indicator.

According to a fifth aspect, an embodiment of this application provides a communication apparatus, including a processor and a memory. The memory is configured to store a computer program, and the processor is configured to invoke and run the computer program stored in the memory, to perform the method in any one of the first aspect, the second aspect, the third aspect, or the possible implementations.

According to a sixth aspect, an embodiment of this application provides a chip, including a processor, configured to invoke computer instructions from a memory and run the computer instructions, to cause a device in which the chip is installed to perform the method in any one of the first aspect, the second aspect, the third aspect, or the possible implementations.

According to a seventh aspect, an embodiment of this application provides a computer-readable storage medium, configured to store computer program instructions. The computer program causes a computer to perform the method in any one of the first aspect, the second aspect, the third aspect, or the possible implementations.

According to an eighth aspect, an embodiment of this application provides a computer program product, including computer program instructions. The computer program instructions cause a computer to perform the method in any one of the first aspect, the second aspect, the third aspect, or the possible implementations.

For beneficial effects of the second aspect to the eighth aspect and the possible implementations, refer to the beneficial effects brought by the first aspect and the possible implementations of the first aspect. Details are not described herein again.

## BRIEF DESCRIPTION OF DRAWINGS

FIG. 1 is a diagram of a communication system applicable to an embodiment of this application;
FIG. 2a is a diagram of a structure of a communication apparatus for implementing hardware correction according to an embodiment of this application;

FIG. 2b is a diagram of a system for implementing air interface correction according to an embodiment of this application;
FIG. 3 is a schematic flowchart of a correction method according to an embodiment of this application;
FIG. 4 is a schematic flowchart of a correction method according to an embodiment of this application;
FIG. 5 is a schematic interaction flowchart of a correction method according to an embodiment of this application;
FIG. 6 is a schematic block diagram of a communication apparatus according to an embodiment of this application; and
FIG. 7 is a schematic block diagram of another communication apparatus according to an embodiment of this application.

## DESCRIPTION OF EMBODIMENTS

The following describes technical solutions of this application with reference to accompanying drawings.

A communication method provided in this application may be applied to various communication systems, for example, a global system for mobile communications (Global System for Mobile communications, GSM, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an advanced long term evolution (Advanced long term evolution, LTE-A) system, a new radio (New Radio, NR) system, an evolved system of the NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial network (Non-Terrestrial Network, NTN) system, a universal mobile telecommunication system (Universal Mobile Telecommunication System, UMTS), a wireless local area network (Wireless Local Area Network, WLAN), wireless fidelity (Wireless Fidelity, Wi-Fi), a 5th-generation (5th-Generation, 5G) communication system, or another communication system.

In some embodiments, the communication system in embodiments of this application may be applied to a carrier aggregation (Carrier Aggregation, CA) scenario, may be applied to a dual connectivity (Dual Connectivity, DC) scenario, and may be further applied to a standalone (Standalone, SA) networking scenario.

Various embodiments are described with reference to a network device and a terminal device in embodiments of this application. The terminal device may also be referred to as user equipment (User Equipment, UE), an access terminal, a subscriber unit, a subscriber station, a mobile station, a remote station, a remote terminal, a mobile device, a user terminal, a terminal, a wireless communication apparatus, a user agent, a user apparatus, or the like.

The terminal device may be a station (STATION, ST) in a WLAN, or may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device having a wireless communication function, a computing device, another processing device connected to a wireless modem, a vehicle-mounted device, a wearable device, a terminal device in a next-generation communication system, for example, an NR network, a terminal device in a future evolved public land mobile network (Public Land Mobile Network, PLMN), or the like.

In embodiments of this application, the terminal device may be deployed on land, including indoors or outdoors, handheld, wearable, or vehicle-mounted; may be deployed on water (for example, on a ship); or may be deployed in air (for example, on an airplane, a balloon, or a satellite).

In embodiments of this application, the terminal device may be a mobile phone (Mobile Phone), a tablet computer (Pad), a computer having a wireless transceiver function, a virtual reality (Virtual Reality, VR) terminal device, an augmented reality (Augmented Reality, AR) terminal device, a wireless terminal device in industrial control (industrial control), a wireless terminal device in self driving (self driving), a wireless terminal device in remote medical (remote medical), a wireless terminal device in a smart grid (smart grid), a wireless terminal device in transportation safety (transportation safety), a wireless terminal device in a smart city (smart city), a wireless terminal device in a smart home (smart home), or the like.

By way of example but not limitation, in embodiments of this application, the terminal device may alternatively be a wearable device. The wearable device may also be referred to as a wearable intelligent device, and is a general term of wearable devices that are intelligently designed and developed for daily wear by using a wearable technology, for example, glasses, gloves, a watch, clothing, and shoes. The wearable device is a portable device that can be directly worn on the body or integrated into clothes or accessories of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In embodiments of this application, the network device may also be referred to as a communication apparatus, a communication unit, or the like. This is not limited in this application. The network device is used as an example for description subsequently. The network device may be a device configured to communicate with a mobile device. The network device may be an access point (Access Point, AP) in a WLAN, a base transceiver station (Base Transceiver Station, BTS) in GSM or CDMA, a NodeB (NodeB, NB) in WCDMA, an evolved NodeB (Evolved NodeB, eNB or eNodeB) in LTE, a relay station, an access point, a vehicle-mounted device, a wearable device, a network device or a gNB (gNB) in an NR network, a network device in a future evolved PLMN network, a network device in an NTN network, or the like.

By way of example but not limitation, in embodiments of this application, the network device may have a mobility characteristic. For example, the network device may be a mobile device. In some embodiments, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, or a high elliptical orbit (High Elliptical Orbit, HEO) satellite. In some embodiments, the network device may alternatively be a base station disposed at a location such as land or water.

In embodiments of this application, the network device may provide a service for a cell, and the terminal device communicates with the network device by using a transmission resource (for example, a frequency domain resource, namely, a spectrum resource) used for the cell. The cell may be a cell corresponding to the network device (for example, a base station). The cell may belong to a macro base station, or may belong to a base station corresponding to a small cell (Small cell). The small cell herein may include a metro cell (Metro cell), a micro cell (Micro cell), a pico cell (Pico cell), a femto cell (Femto cell), and the like. These small cells have characteristics of a small coverage area and low transmit power, and are suitable to provide a high-rate data transmission service.

It should be understood that specific forms of both the network device and the terminal device are not limited in this application.

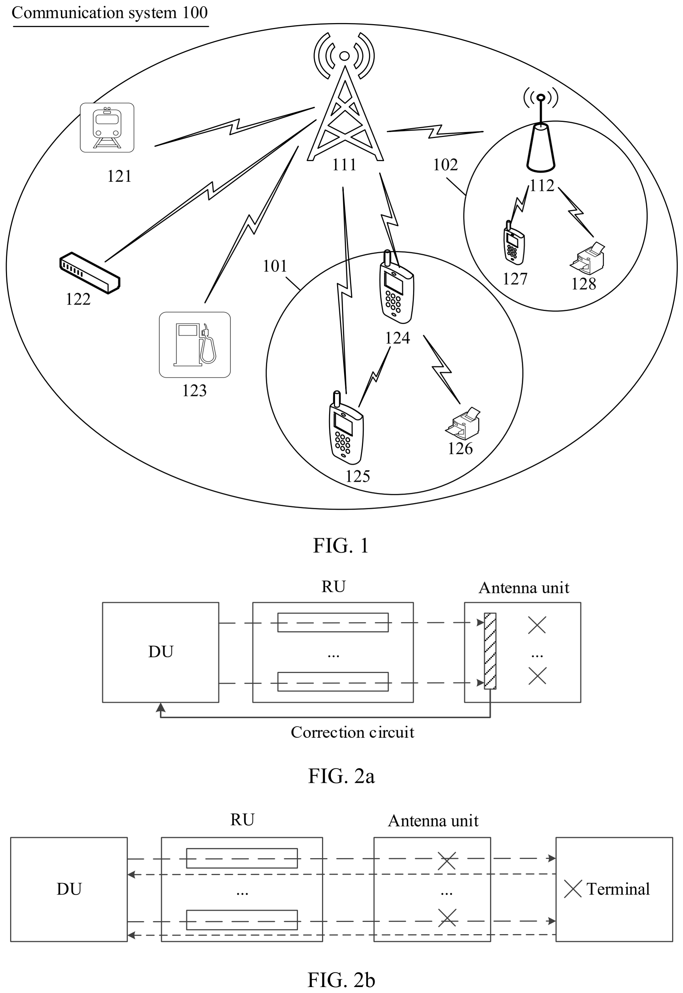

For ease of understanding of embodiments of this application, a communication system applicable to embodiments of this application is first described in detail with reference to FIG. 1. FIG. 1 is a diagram of a communication system applicable to a communication method according to an embodiment of this application. As shown in FIG. 1, the communication system 100 may include a network device and a terminal device. There may be one or more network devices and one or more terminal devices, for example, network devices 111 and 112 and terminal devices 121 to 128 shown in FIG. 1. In the communication system 100, the network device 111 may communicate with one or more of the terminal devices 121 to 126 through a wireless air interface, and the network device 111 may communicate with one or both of the terminal devices 127 and 128 through the network device 112. In addition, the terminal devices 124 to 126 may form a communication system 101. In the communication system 101, the terminal device 124 may communicate with one or both of the terminal devices 125 and 126 through a wireless air interface. The network device 112 and the terminal devices 127 and 128 may form a communication system 102. In the communication system 102, the network device 112 may communicate with one or both of the terminal devices 127 and 128 through a wireless air interface.

It should be understood that the communication system 101 may be a subsystem of the communication system 100 or a communication system independent of the communication system 100. The communication system 102 may be a subsystem of the communication system 100 or a communication system independent of the communication system 100.

It should be further understood that FIG. 1 is merely an example, and shows two network devices and eight terminal devices in the communication system 100, three terminal devices in the communication system 101, and one network device and two terminal devices in the communication system 102. However, this shall not constitute any limitation on this application. Any one of the foregoing communication systems may include more or fewer network devices, or include more or fewer terminal devices. This is not limited in this embodiment of this application.

Currently, when radio frequency channel correction is performed for a network device, hardware correction or air interface correction may be included. The following describes the foregoing hardware correction and air interface correction by using examples with reference to FIG. 2a and FIG. 2b.

FIG. 2a is a diagram of a structure of a communication apparatus for implementing hardware correction according to an embodiment of this application. As shown in FIG. 2a, the communication apparatus includes a distributed unit (distributed unit, DU), a radio unit (radio unit, RU), and an antenna unit. The RU and the antenna unit include M radio frequency channels. The radio frequency channel includes a receive/transmit channel, and M is an integer greater than 1.

The communication apparatus further includes a correction circuit. The correction circuit includes a correction board. The correction circuit obtains a signal by using the correction board, and feeds back the obtained signal to the DU, so that the DU can perform correction based on the obtained signal. A correction measurement range of the correction circuit is related to a deployment location of the correction board in the communication apparatus. When the correction board is disposed between the receive/transmit channel and an antenna, a correction detection object may be the receive/transmit channel. When the correction board is deployed in the antenna, the correction detection object may be a radio frequency channel included in a link from the DU to a reflection board and a partial structure of the antenna.

An ideal correction capability of the foregoing hardware correction is to achieve zero difference. Therefore, the hardware correction is applicable to all signals in a cell, and has an advantage of "cell-level correction". However, the hardware correction is susceptible to residual inconsistency outside the correction circuit. For example, the hardware correction method cannot correct inconsistency over a link from the correction board to an air interface. However, due to instability of a manufacturing process and quality, a probability of inconsistency in a part from the correction board to an antenna transmit port is also relatively high.

FIG. 2a is described by using an example in which the antenna unit is independent of the RU. This is not limited in this application. The antenna unit may alternatively be integrated into the RU.

FIG. 2b is a diagram of a system for implementing air interface correction according to an embodiment of this application. As shown in FIG. 2b, a communication apparatus may send a correction signal to a terminal device. The correction signal reaches the terminal device through a radio frequency channel and air interface transmission. The terminal device quantizes inter-channel difference information measured based on the correction signal, and feeds back the quantized information to the communication apparatus, so that the communication apparatus obtains the inter-channel difference information. It can be learned that the air interface correction can enable the correction signal to pass through a complete hardware path between an RU and an antenna. Therefore, the obtained difference information includes measurement information of a complete communication link. The air interface correction depends on measurement feedback of some terminals in a cell coverage area, and has an advantage of "user-level correction". However, in one aspect, the air interface correction depends on measurement precision of a terminal, and is easily affected by measurement feedback of the terminal. Because inconsistency in air interface transmission is uncontrollable, and a purpose of correction is to correct inconsistency between radio frequency channels, the air interface correction is easily affected by inconsistency between capabilities of different terminals. In another aspect, the air interface correction implements equal difference between radio frequency channels instead of zero difference. After ideal air interface correction is performed on a signal, beamforming is performed. To be specific, pre-correction is performed on signals of antennas in M radio frequency channels based on a group of equal difference sequences, which is equivalent to a method for obtaining maximum superimposed signal strength in an angle direction corresponding to a specific difference value. In this case, an air interface correction result cannot meet a beamforming precision requirement, that is, there is no "cell-level correction" advantage in a beamforming scenario.

For the foregoing technical problem, embodiments of this application provide a correction method and an apparatus, to improve performance of a communication network.

It should be noted that, in some possible definitions of a radio frequency channel, an antenna (or an antenna subarray) may not be included. When the radio frequency channel does not include an antenna (or an antenna subarray), the radio frequency channel in embodiments of this application may be replaced with a radio frequency channel and an antenna, and a receive/transmit channel may be replaced with a radio frequency channel. The receive/transmit channel is named only for distinguishing from the radio frequency channel, and is essentially a channel for implementing radio frequency receiving/transmitting in a DU.

It should be further understood that, in embodiments of this application, regardless of whether a correction object includes an antenna, the correction may be referred to as correction of a radio frequency channel, and a difference lies in only a source (or a correction transceiver loop for obtaining the correction signal) of the correction signal.

With reference to the accompanying drawings, the following describes in detail the communication method provided in embodiments of this application.

It should be understood that the following is merely for ease of understanding and description, and interaction between a network device and a terminal device is used as an example for description. The network device may be understood as a device that performs correction. The terminal device may be understood as a device that participates in correction, or the terminal device may be understood as a device that cooperates with the network device to perform correction. There may be one or more terminal devices.

The network device may be, for example, 111 or 112 in FIG. 1, and the terminal device may be, for example, any one of the terminal devices 121 to 128 in FIG. 1. When the network device is the network device 112 in FIG. 1, the terminal device may be the terminal device 127 or 128 in FIG. 1.

This shall not constitute any limitation on an execution body of the method provided in this application. Any device may serve as the execution entity of the method provided in embodiments of this application provided that a program that records code of the method provided in embodiments of this application can be run to perform the method provided according to embodiments of this application. For example, the communication apparatus shown in the following embodiments may alternatively be replaced with a component, for example, a chip, a chip system, or another functional module that can invoke and execute a program, in the communication apparatus.

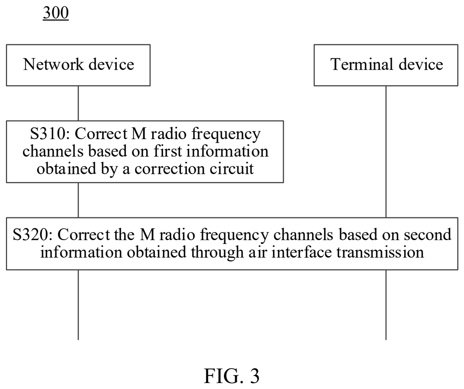

FIG. 3 is a schematic flowchart of a correction method 300 according to an embodiment of this application. As shown in FIG. 3, the method 300 may include S310 and S320. The following describes the steps in the method 300 in detail.

S310: Correct M radio frequency channels based on first information obtained by a correction circuit.

S320: Correct the M radio frequency channels based on second information obtained through air interface transmission.

The M radio frequency channels are deployed in a network device, or deployed in a unit or a module in the network device.

Correcting the M radio frequency channels may be correcting inconsistency in at least one dimension of a signal amplitude, a phase, a delay, or a frequency, that is, including performing at least one of signal amplitude correction, phase correction, delay correction, and frequency correction on the M radio frequency channels. Correcting the M radio frequency channels may also be referred to as performing compensation on signals transmitted on the M radio frequency channels.

The first information may be a first correction coefficient used to correct the M radio frequency channels. For example, when sending, by using the M radio frequency channels, reference information (or referred to as a correction sequence signal) used for hardware correction, the network device collects, by using the correction circuit, information sent by using the M radio frequency channels, and determines the first information based on the collected information. For the correction circuit, refer to FIG. 2a. For brevity, details are not described again.

The second information may be a second correction coefficient determined based on a channel measurement result. For example, the network device may send first reference information to a terminal device, receive first channel measurement information sent by the terminal device, and determine the second information based on the first channel measurement information. In this embodiment of this application, only downlink measurement is used as an example for description, but this is not limited. For example, the terminal device may send the first reference information to the network device, and the network device determines the second information based on the first reference information.

Optionally, the channel measurement result used to determine the second information may be a codebook, for example, a precoding matrix indicator (precoding matrix indicator, PMI).

Because the first information collected by the correction circuit reflects inconsistency between some structures of the radio frequency channels, inconsistency between the radio frequency channels cannot be completely reflected, that is, inconsistency between at least some structures of antennas cannot be reflected. Therefore, the first reference information is reference information for correction based on the first information. In this case, the second information determined after channel measurement is performed based on the first reference information can reflect inconsistency outside a measurement range of the correction circuit, to supplement the first information. It can be learned that a combination of the first information and the second information may completely reflect inconsistency between the M radio frequency channels. Therefore, the network device corrects the M radio frequency channels by combining the first information and the second information, thereby improving correction precision.

It should be noted that a sequence of performing S310 and S320 is not limited in this application. For example, the network device may first correct the M radio frequency channels based on the first information, and then correct the M corrected radio frequency channels based on the second information. For another example, the network device may first correct the M corrected radio frequency channels based on the second information, and then correct the M corrected radio frequency channels based on the first information.

An example in which the M radio frequency channels are first corrected based on the first information, and then the M corrected radio frequency channels are corrected based on the second information is used below to describe an implementation that combines hardware correction and air interface correction.

A distributed unit of the network device may send reference information $s_{r1}$ used for the hardware correction. The information collected by the correction circuit may include information collected on each radio frequency channel. Using an $i^{th}$ radio frequency channel and a $j^{th}$ radio frequency channel in the M radio frequency channels as an example, information collected on the $i^{th}$ radio frequency channel is $\alpha_i \cdot s_{r1}$, information collected on the $j^{th}$ radio frequency channel is $\alpha_j \cdot s_{r1}$, and the distributed unit estimates a difference between the $i^{th}$ radio frequency channel and the $j^{th}$ radio frequency channel to obtain a difference coefficient $\alpha_{ij} = \alpha_i / \alpha_j$, to obtain a first correction coefficient $f(\alpha_{ij})$. Further, the distributed unit performs pre-compensation on to-be-sent information s, to obtain $f(\alpha_{ij}) \cdot s$, so that a difference coefficient between information sent by using the $i^{th}$ radio frequency channel and the $j^{th}$ radio frequency channel is 1, that is, $f(\alpha_{ij}) \cdot \alpha_{ij} = 1$.

Further, the distributed unit of the network device sends first reference information $s_{r2}$, where the first reference information $s_{r2}$ is transmitted to the distributed unit through air interface transmission and measurement feedback of the terminal device after passing through the M radio frequency channels. The first reference information $s_{r2}$ changes to $\beta_i \cdot s_{r2}$ after passing through the $i^{th}$ radio frequency channel, and the first reference information $s_{r2}$ changes to $\beta_j \cdot s_{r2}$ after passing through the $j^{th}$ radio frequency channel. The distributed unit estimates a difference between the $i^{th}$ radio frequency channel and the $j^{th}$ radio frequency channel to obtain a difference

coefficient $\beta_{ij} = \beta_i / \beta_j$, to obtain a second correction coefficient $f(\beta_{ij})$. Further, the distributed unit performs pre-compensation on the to-be-sent information s, to obtain $f(\beta_{ij}) \cdot f(\alpha_{ij}) \cdot s$, so that a difference coefficient between information sent by using the $i^{th}$ radio frequency channel and the $j^{th}$ radio frequency channel is 1, that is, $f(\beta_{ij}) \cdot \beta_{ij} \cdot f(\alpha_{ij}) \cdot \alpha_{ij} = 1$. $f(\beta_{ij})$ is the second correction coefficient corresponding to the difference coefficient $\beta_{ij}$.

Optionally, the network device may periodically correct the M radio frequency channels based on the first information. The periodicity may be, for example, 30 minutes. In specific implementation, a value of the periodicity may be set based on an actual situation, or may be 10 minutes, 1 day, or the like. Similarly, the network device may periodically correct the M radio frequency channels based on the second information. The periodicity may be, for example, 30 minutes. A periodicity of the hardware correction and a periodicity of the air interface correction may be the same or different. In addition, when the periodicities are the same, correction occasions of the hardware correction and the air interface correction may be the same or different.

In this embodiment of this application, the network device may correct the M radio frequency channels in the following information sending scenarios:

    Scenario 1: The network device sends user-level information to the terminal device.
    Scenario 2: The network device sends cell-level information to the terminal device in a single-beam communication manner. It should be understood that even if the network device supports multi-beam communication, only single-beam communication is used in this scenario.
    Scenario 3: The network device sends cell-level information to the terminal device based on a beamforming technology.

In the foregoing scenario 1, the user-level information is information sent by the network device to a specific terminal device. The user-level information transmitted by the network device may include data information and reference information (for example, at least one of the foregoing first reference information, the following second reference information, and the following third reference information). The data information may alternatively be referred to as service information, a service signal, or the like, and the reference information may alternatively be referred to as a reference signal or the like.

Cell-level reference information is information sent by the network device to a terminal device in a cell coverage area, or common information sent by the network device to a group of terminal devices in a specific coverage area, for example, broadcast-level information (or referred to as a broadcast signal). In the foregoing scenario 2, the cell-level information is sent in the single-beam communication manner. In the foregoing scenario 3, a cell-level signal is sent based on the beamforming technology.

The cell-level information transmitted by the network device may include broadcast-level information, and the broadcast-level information may include reference information (for example, at least one of the foregoing first reference information, the following second reference information, and the following third reference information). When the reference information transmitted by the network device is the cell-level information, the reference information may be a synchronization signal (synchronization signal block, SSB), a cell reference signal (cell reference signal, CRS), or the like.

The network device performs the hardware correction and the air interface correction on the M radio frequency channels. This prevents inconsistency outside the correction circuit from affecting correction precision, also prevents inconsistency in air interface transmission during air interface correction from affecting correction precision. However, to ensure correction precision of the M radio frequency channels, a matching correction manner may be selected. The correction manner may include: 1. the hardware correction; and 2. the hardware correction and the air interface correction. In a correction manner of the hardware correction, the network device may perform S310. In a correction manner of the hardware correction and the air interface correction, the network device may perform S310 and S320.

The network device may determine a used correction manner based on the foregoing three scenarios. As described above, when the network device sends the cell-level information to the terminal device based on the beamforming technology (that is, the scenario 3), the air interface correction has relatively low correction precision, and when the network device sends the user-level information to the terminal device (that is, the scenario 1), the air interface correction has relatively high correction precision. When the network device supports single-beam communication (for example, the foregoing scenario 2), similar to the scenario 1, beamforming is not required. Therefore, the air interface correction has relatively high correction precision for the cell-level information.

Therefore, in a first example, in the foregoing scenario 1 and scenario 2, the network device may perform the hardware correction and the air interface correction on the M radio frequency channels. In the foregoing scenario 3, the network device may perform the hardware correction on the M radio frequency channels.

In a second example, the network device may determine a used correction manner based on a quality parameter of channel quality. It should be noted that when consistency between different antennas is relatively high, using the hardware correction achieves better correction precision. When consistency in air interface transmission is relatively high, a comprehensive result of the air interface correction based on a plurality of terminal devices is close to a correction result of a specific single terminal device, indicating that the air interface correction result more matches channel transmission of the specific terminal, that is, compensation performance based on the air interface correction is better. In this case, using a manner of combining the hardware correction and the air interface correction (referred to as joint correction for short below) achieves better correction precision.

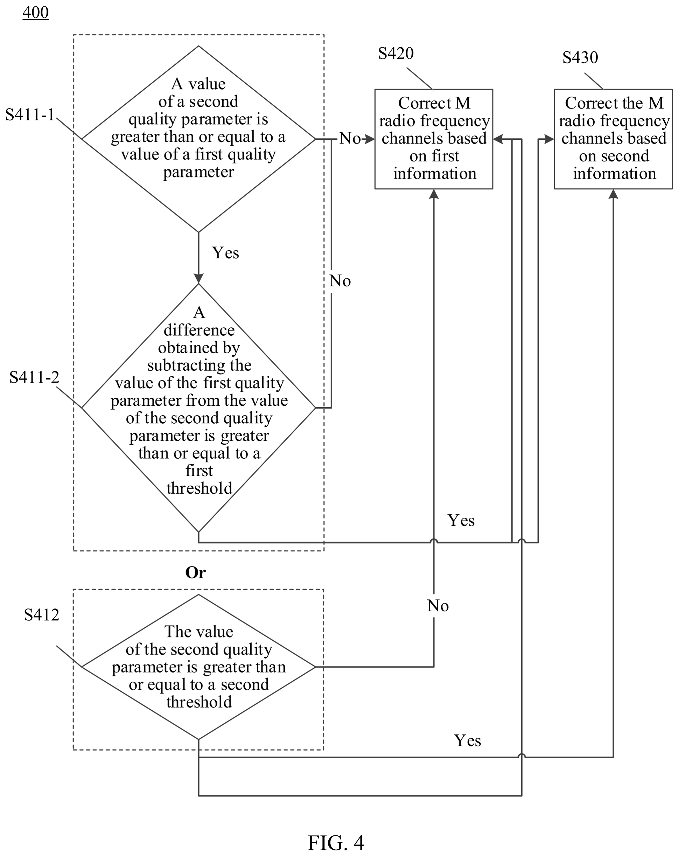

The second example is described below with reference to FIG. 4. FIG. 4 is a schematic flowchart of a correction method according to an embodiment of this application. The method 400 shown in FIG. 4 may include the following steps.

S411-1: A network device determines whether a value of a second quality parameter is greater than or equal to a value of a first quality parameter. When the value of the second quality parameter is greater than or equal to the value of the first quality parameter, the network device performs S411-2. When the value of the second quality parameter is less than the value of the first quality parameter, the network device performs S420.

S411-2: The network device determines whether a difference obtained by subtracting the value of the first quality parameter from the value of the second quality parameter is greater than or equal to a first threshold. When the difference obtained by subtracting the value of the first quality parameter from the value of the second quality parameter is greater than or equal to the first threshold, the network device performs S420 and S430. When the difference obtained by subtracting the value of the first quality parameter from the value of the second quality parameter is less than the first threshold, the network device performs S420.

S412: The network device determines whether the value of the second quality parameter is greater than or equal to a second threshold. When the value of the second quality parameter is greater than or equal to the second threshold, the network device performs S420 and S430. When the value of the second quality parameter is less than the second threshold, the network device performs S420.

S420: The network device corrects M radio frequency channels based on first information.

S430: The network device corrects the M radio frequency channels based on second information.

Both the first quality parameter and the second quality parameter may be used to represent communication quality of the M radio frequency channels. The first quality parameter is a quality parameter obtained by correcting the M radio frequency channels based on the first information, and the second quality parameter is a quality parameter obtained by correcting the M radio frequency channels based on the second information. Both the first quality parameter and the second quality parameter may be obtained by measuring channel quality based on reference information.

In S411-1, if the network device determines that channel quality obtained through joint correction (both S420 and S430 are performed, or may be understood as a combination of hardware correction and air interface correction) is better than channel quality obtained through only the hardware correction, the network device further determines whether to use a correction manner of the joint correction. If the network device determines that channel quality obtained through the hardware correction is better than channel quality obtained after the joint correction, the network device determines to use a correction manner of the hardware correction.

In S411-2, when channel quality obtained after joint correction is better than channel quality obtained through only hardware correction, the network device determines whether a difference between the channel quality obtained through the joint correction and the channel quality obtained through only the hardware correction is large enough, that is, evaluates, in a channel quality dimension, whether using the joint correction has a relatively large advantage over using the hardware correction. When using the joint correction has a relatively large advantage, the network device determines to use a correction manner of the joint correction. When the joint correction does not have a relatively large advantage, the network device uses only a correction manner of the hardware correction.

For S411-2, it should be noted that air interface correction is to obtain a correction coefficient by using sampling of a live network user. Therefore, a sampling result of the user affects accuracy of the air interface correction. In other words, a comprehensive result of the air interface correction of a plurality of terminal devices is not sufficiently close to a correction result of a specific single terminal device, and consequently, correction precision of the air interface correction of the single terminal device is relatively low. Therefore, when channel quality obtained after the correction is obviously better than channel quality obtained after the hardware correction, a joint correction method is used.

Optionally, when the value of the first quality parameter is greater than a third threshold, the network device may determine, based on whether the difference obtained by subtracting the value of the first quality parameter from the value of the second quality parameter is greater than or equal to the first threshold, whether to correct the M radio frequency channels based on the second information. When correction precision of the hardware correction meets a requirement, selection is performed between the hardware correction and the joint correction, so that processing efficiency can be improved, and relatively low correction precision caused by the hardware correction is avoided.

In S412, when the value of the second quality parameter is greater than or equal to the second threshold, the network device may determine to use the correction manner of the joint correction, and when the value of the second quality parameter is less than the second threshold, correct the M radio frequency channels in the correction manner of the hardware correction. In this case, determining does not need to be performed with reference to the first quality parameter, thereby improving processing efficiency while ensuring communication quality.

Either S411-1 and S411-2 or S420 is performed. Certainly, this application does not exclude that a correction manner is selected in combination with S420 in S411-1 and S411-2. For example, the network device may select the correction manner of the joint correction when the value of the second quality parameter is greater than or equal to the second threshold, and the difference obtained by subtracting the value of the first quality parameter from the value of the second quality parameter is greater than or equal to the first threshold.

In some embodiments, S411-2 may not be performed. To be specific, when the value of the second quality parameter is greater than or equal to the value of the first quality parameter, the network device may determine to use the correction manner of the joint correction, and when the value of the second quality parameter is less than the value of the first quality parameter, determine to use the correction manner of the hardware correction.

For S420 and S430, refer to descriptions of S310 and S320 in FIG. 3. Details are not described again.

The first example and the second example may be combined with each other, to select a correction manner. For example, the network device may determine the correction manner based on the second example in the foregoing scenario 1 and scenario 2, and determine that the correction manner is the hardware correction in the foregoing scenario 3.

It should be understood that a value of the first threshold, the second threshold, or the third threshold is not limited, and may be set based on an actual situation. Values of the first threshold, the second threshold, or the third threshold may be the same, or may be different from each other, or may be the same in pairs. This is not limited in this application.

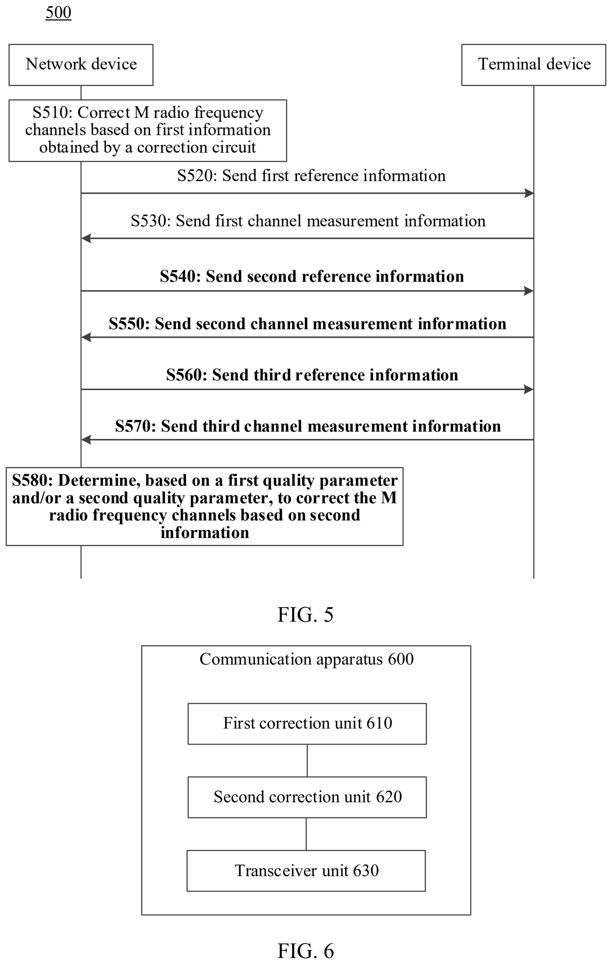

FIG. 5 is a schematic interaction flowchart of a correction method according to an embodiment of this application. With reference to FIG. 5, the method 500 may include the following steps.

S510: A network device corrects M radio frequency channels based on first information obtained by a correction circuit.

S520: The network device sends first reference information to a terminal device.

S530: The terminal device sends first channel measurement information to the network device.

S540: The network device sends second reference information to the terminal device.

S550: The terminal device sends second channel measurement information to the network device.

S560: The network device sends third reference information to the terminal device.

S570: The terminal device sends third channel measurement information to the network device.

S580: The network device determines, based on a first quality parameter and/or a second quality parameter, to correct the M radio frequency channels based on a second information.

S510 corresponds to S310 in FIG. 3, and the two have a same or similar implementation. For brevity, details are not described again.

S520 and S530 are used to measure a channel based on air interface transmission, to determine the second information based on a measurement result. The first reference information and the first channel measurement information are described in the foregoing example. For brevity, details are not described again.

S540 and S550 are used to measure a channel based on air interface transmission, to obtain channel quality obtained after hardware correction.

S560 to S570 are used to measure a channel based on air interface transmission, to obtain channel quality obtained after hardware correction and air interface correction.

In S540 and S550, the second reference information sent by the network device may be reference information obtained after correction is performed based on the first information, or the second reference information is reference information obtained after the hardware correction. The terminal device performs measurement based on the second reference information, sends the second channel measurement information to the network device, and reports a measurement result. The second channel measurement information may indicate the first quality parameter. Optionally, the first quality parameter may be determined based on the second channel measurement information, for example, may include an average signal-to-noise ratio and/or an equivalent capacity.

In S560 and S570, the third reference information may be reference information obtained after correction is performed based on the second information, or the third reference information is reference information obtained after joint correction. The terminal device performs measurement based on the third reference information, sends the third channel measurement information to the network device, and reports a measurement result. The third channel measurement information may indicate the second quality parameter. Optionally, the second quality parameter may be determined based on the third channel measurement information, for example, may include an average signal-to-noise ratio and/or an equivalent capacity.

In S580, a process of determining a correction manner shown in FIG. 4 may be used, to determine whether to correct the M radio frequency channels based on the second information, and perform the correction process when it is determined that the M radio frequency channels need to be corrected based on the second information.

Optionally, an example in which the reference information (including the first reference information, the second reference information, and the third reference information) is reference information used for downlink channel measurement is used for description in the foregoing. However, this is not limited in this application. Any one or more pieces of the reference information in the foregoing may alternatively be reference information used for uplink channel measurement. When the reference information is the reference information used for uplink channel measurement, the network device may receive the reference information sent by the terminal device, and determine channel quality based on the reference information, for example, determine the second information based on the received first reference information, determine the first quality parameter based on the received second reference information, and determine the second quality parameter based on the received third reference information.

A reference signal used for downlink channel measurement may be, for example, a channel state information-reference signal (channel state information-reference signal, CSI-RS). A reference signal used for uplink channel measurement may be, for example, a channel sounding reference signal (sounding reference signal, SRS).

FIG. 6 is a schematic block diagram of a communication apparatus according to an embodiment of this application. As shown in FIG. 6, the apparatus 500 may include a first correction unit 610 and a second correction unit 620.

The first correction unit 610 may be configured to correct M radio frequency channels based on first information obtained by a correction circuit. The second correction unit 620 may be configured to correct the M radio frequency channels based on second information obtained through air interface transmission. The M radio frequency channels are deployed in the communication apparatus, and M is an integer greater than 1.

In a possible implementation, the correction is used for transmission of user-level information.

In a possible implementation, the user-level information includes data information and reference information.

In a possible implementation, the correction is used for transmission of cell-level information, and the communication apparatus supports single-beam communication.

In a possible implementation, the cell-level information includes broadcast-level information, and the broadcast-level information includes a reference signal.

In a possible implementation, the second correction unit 620 is specifically configured to: when a value of a second quality parameter is greater than or equal to a value of a first quality parameter, correct the M radio frequency channels based on the second information obtained through the air interface transmission, where the first quality parameter is a quality parameter obtained by correcting the M radio frequency channels based on the first information, and the second quality parameter is a quality parameter obtained by correcting the M radio frequency channels based on the second information.

In a possible implementation, a difference obtained by subtracting the value of the first quality parameter from the value of the second quality parameter is greater than or equal to a first threshold.

In a possible implementation, the second correction unit 620 is specifically configured to: when a value of a second quality parameter is greater than or equal to a second threshold, correct the M radio frequency channels based on the second information obtained through the air interface transmission, where the second quality parameter is a quality parameter obtained by correcting the M radio frequency channels based on the second information.

In a possible implementation, the second correction unit 620 is specifically configured to: after the M radio frequency channels are corrected based on the first information, correct the M radio frequency channels based on the second information.

In a possible implementation, the correction includes correcting information transmitted by the M radio frequency channels in at least one of the following dimensions: frequency, phase, delay, or signal amplitude.

In a possible implementation, the apparatus further includes: a transceiver unit 630, configured to send first reference information, where the first reference information is reference information for correction based on the first information. The transceiver unit is further configured to receive the second information, where the second information includes a precoding matrix indicator. In some embodiments, the apparatus 600 further includes the transceiver unit 630.

The units in the communication apparatus 600 may be independent units, and may be integrated into a same unit as subunits. For example, the first correction unit 610 and the second correction unit 620 may be integrated into a correction unit.

It should be understood that a specific process in which the units perform the foregoing corresponding steps is described in detail in the foregoing method embodiments, and for brevity, details are not described herein again.

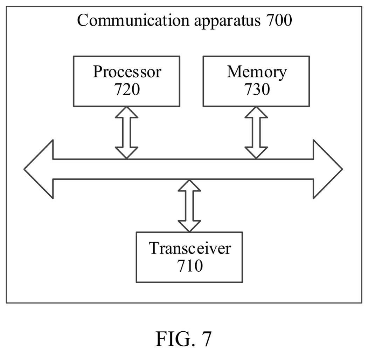

The transceiver unit 630 in the communication apparatus 600 may be implemented by using a transceiver, for example, may correspond to the transceiver 710 in the communication apparatus 700 shown in FIG. 7. The first correction unit 610 and the second correction unit 620 in the communication apparatus 600 may be implemented by using at least one processor, for example, may correspond to the processor 720 in the communication apparatus 700 shown in FIG. 7.

FIG. 7 is a schematic block diagram of another communication apparatus according to an embodiment of this application. As shown in FIG. 7, the communication apparatus 700 may include a transceiver 710, a processor 720, and a memory 730. The transceiver 710, the processor 720, and the memory 730 communicate with each other by using an internal connection path, the memory 730 is configured to store instructions, and the processor 720 is configured to execute the instructions stored in the memory 730, to control the transceiver 710 to send a signal and/or receive a signal.

It should be understood that the communication apparatus 700 may correspond to the network device in the foregoing method embodiments, and may be configured to perform the steps and/or the procedures performed by the network device in the foregoing method embodiments. Optionally, the memory 730 may include a read-only memory and a random access memory, and provide instructions and data for the processor. A part of the memory may further include a nonvolatile random access memory. The memory 730 may be an independent component, or may be integrated into the processor 720. The processor 720 may be configured to execute the instructions stored in the memory 730, and when the processor 720 executes the instructions stored in the memory, the processor 720 is configured to perform the steps and/or the procedures corresponding to the network device in the foregoing method embodiments.

Optionally, the communication apparatus 700 is the network device in the foregoing embodiments.

The transceiver 710 may include a transmitter and a receiver. The transceiver 710 may further include an antenna. There may be one or more antennas. The processor 720, the memory 730, and the transceiver 710 may be components integrated into different chips. For example, the processor 720 and the memory 730 may be integrated into a baseband chip, and the transceiver 710 may be integrated into a radio frequency chip. Alternatively, the processor 720, the memory 730, and the transceiver 710 may be components integrated into a same chip. This is not limited in this application.

Optionally, the communication apparatus 700 is a component, such as a chip or a chip system, configured in a first device.

Optionally, the communication apparatus 700 is a component, such as a chip or a chip system, configured in a second device.

Alternatively, the transceiver 720 may be a communication interface, for example, an input/output interface or a circuit. The transceiver 720, the processor 710, and the memory 730 may be integrated into a same chip, for example, integrated into a baseband chip.

This application further provides a processing apparatus, including at least one processor. The at least one processor is configured to execute a computer program stored in a memory, so that the processing apparatus performs the method performed by the network device in the foregoing method embodiments.

An embodiment of this application further provides a processing apparatus, including a processor and an input/output interface. The input/output interface is coupled to the processor. The input/output interface is configured to input and/or output information. The information includes at least one of instructions and data. The processor is configured to execute a computer program, so that the processing apparatus performs the method performed by the network device in the foregoing method embodiments.

An embodiment of this application further provides a processing apparatus, including a processor and a memory. The memory is configured to store a computer program, and the processor is configured to invoke the computer program from the memory and run the computer program, so that the processing apparatus performs the method performed by the network device in the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

In an implementation process, the steps in the foregoing methods may be implemented by using a hardware integrated logical circuit in the processor, or by using instructions in a form of software. The steps in the methods disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware in the processor. To avoid repetition, details are not described herein again.

It should be noted that, the processor in embodiments of this application may be an integrated circuit chip, and has a signal processing capability. In an implementation process, the steps in the foregoing method embodiments may be implemented by using a hardware integrated logic circuit in the processor or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor can implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware in the processor.

It may be understood that, the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories in the systems and methods described in this specification are intended to include but not limit to these memories and any memories of other proper types.

According to the method provided in embodiments of this application, this application further provides a computer program product. The computer program product includes computer program code. When the computer program code is run on a computer, the computer is caused to perform the method performed by the network device in the foregoing method embodiments.

According to the method provided in embodiments of this application, this application further provides a computer-readable storage medium. The computer-readable storage medium stores program code. When the program code is run on a computer, the computer is caused to perform the method performed by the network device in the foregoing method embodiments.

According to the method provided in embodiments of this application, this application further provides a communication system. The communication system may include the first device and the second device described above.

Terms such as "component", "module", and "system" used in this specification indicate computer-related entities, hardware, firmware, a combination of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside in a process and/or an execution thread, and a component may be located on one computer and/or distributed between two or more computers. In addition, these components may be executed from various computer-readable media that store various data structures. For example, the components may perform communication by using a local process and/or a remote process and based on a signal having one or more data packets (for example, data from two components interacting with another component in a local system, a distributed system, and/or across a network such as the Internet interacting with another system by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the system, apparatus, and unit described above, refer to a corresponding process in the foregoing method embodiments. Details are not described herein again.

In the several embodiments provided in this application, it should be understood that the disclosed system, apparatus, and method may be implemented in other manners. For example, the apparatus embodiments described above are merely examples. For example, division into the units is merely logical function division and may be other division in an actual implementation. For example, a plurality of units or components may be combined or integrated into another system, or some features may be ignored or not performed.

In addition, the displayed or discussed mutual couplings or direct couplings or communication connections may be implemented by using some interfaces. The indirect couplings or communication connections between the apparatuses or units may be implemented in an electrical form, a mechanical form, or other forms.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, functional units in embodiments of this application may be integrated into one processing module, or each of the units may exist alone physically, or two or more units are integrated into one unit.

When the function is implemented in a form of a software functional unit and sold or used as an independent product, the function may be stored in a computer-readable storage medium. Based on such an understanding, the part of the technical solutions in this application essentially making contribution, or some of the technical solutions may be implemented in a form of a software product. The computer software product is stored in a storage medium and includes several instructions for instructing a computer device (which may be a personal computer, a server, a second device, or the like) to perform all or some of the steps in the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A correction method, wherein the method comprises:

   correcting M radio frequency channels based on first information obtained by a correction circuit; and
   correcting the M radio frequency channels based on second information obtained through air interface transmission, wherein
   the M radio frequency channels are deployed in a communication apparatus, and M is an integer greater than 1.

2. The method according to claim 1, wherein the correction is used for transmission of user-level information.

3. The method according to claim 2, wherein the user-level information comprises data information and reference information.

4. The method according to any one of claims 1 to 3, wherein the correction is used for transmission of cell-level information, and the communication apparatus supports single-beam communication.

5. The method according to claim 4, wherein the cell-level information comprises broadcast-level information, and the broadcast-level information comprises a reference signal.

6. The method according to any one of claims 1 to 5, wherein the correcting the M radio frequency channels based on second information obtained through air interface transmission comprises:

    when a value of a second quality parameter is greater than or equal to a value of a first quality parameter, correcting the M radio frequency channels based on the second information obtained through the air interface transmission, wherein
    the first quality parameter is a quality parameter obtained by correcting the M radio frequency channels based on the first information, and the second quality parameter is a quality parameter obtained by correcting the M radio frequency channels based on the second information.

7. The method according to claim 6, wherein a difference obtained by subtracting the value of the first quality parameter from the value of the second quality parameter is greater than or equal to a first threshold.

8. The method according to any one of claims 1 to 5, wherein the correcting the M radio frequency channels based on second information obtained through air interface transmission comprises:

    when a value of a second quality parameter is greater than or equal to a second threshold, correcting the M radio frequency channels based on the second information obtained through the air interface transmission, wherein the second quality parameter is a quality parameter obtained by correcting the M radio frequency channels based on the second information.

9. The method according to any one of claims 1 to 8, wherein the correcting the M radio frequency channels based on second information obtained through air interface transmission comprises:
after the correcting the M radio frequency channels based on the first information, correcting the M radio frequency channels based on the second information.

10. The method according to any one of claims 1 to 9, wherein the correction comprises correcting information transmitted by the M radio frequency channels in at least one of the following dimensions: frequency, phase, delay, or signal amplitude.

11. The method according to any one of claims 1 to 10, further comprising:

    sending first reference information, wherein the first reference information is reference information for correction based on the first information; and
    receiving the second information, wherein the second information comprises a precoding matrix indicator.

12. A communication apparatus, comprising:

    a first correction unit, configured to correct M radio frequency channels based on first information obtained by a correction circuit; and
    a second correction unit, configured to correct the M radio frequency channels based on second information obtained through air interface transmission, wherein
    the M radio frequency channels are deployed in the communication apparatus, and M is an integer greater than 1.

13. The apparatus according to claim 12, wherein the correction is used for transmission of user-level information.

14. The apparatus according to claim 13, wherein the user-level information comprises data information and reference information.

15. The apparatus according to any one of claims 12 to 14, wherein the correction is used for transmission of cell-level information, and the communication apparatus supports single-beam communication.

16. The apparatus according to claim 15, wherein the cell-level information comprises broadcast-level information, and the broadcast-level information comprises a reference signal.

17. The apparatus according to any one of claims 12 to 16, wherein the second correction unit is specifically configured to:

> when a value of a second quality parameter is greater than or equal to a value of a first quality parameter, correct the M radio frequency channels based on the second information obtained through the air interface transmission, wherein the first quality parameter is a quality parameter obtained by correcting the M radio frequency channels based on the first information, and the second quality parameter is a quality parameter obtained by correcting the M radio frequency channels based on the second information.

18. The apparatus according to claim 17, wherein a difference obtained by subtracting the value of the first quality parameter from the value of the second quality parameter is greater than or equal to a first threshold.

19. The apparatus according to any one of claims 12 to 16, wherein the second correction unit is specifically configured to:

> when a value of a second quality parameter is greater than or equal to a second threshold, correct the M radio frequency channels based on the second information obtained through the air interface transmission, wherein
> the second quality parameter is a quality parameter obtained by correcting the M radio frequency channels based on the second information.

20. The apparatus according to any one of claims 12 to 19, wherein the second correction unit is specifically configured to:
after the M radio frequency channels are corrected based on the first information, correct the M radio frequency channels based on the second information.

21. The apparatus according to any one of claims 12 to 20, wherein the correction comprises correcting information transmitted by the M radio frequency channels in at least one of the following dimensions: frequency, phase, delay, or signal amplitude.

22. The apparatus according to any one of claims 12 to 21, further comprising:

> a transceiver unit, configured to send first reference information, wherein the first reference information is reference information for correction based on the first information, wherein
> the transceiver unit is further configured to receive the second information, wherein the second information comprises a precoding matrix indicator.

23. A communication apparatus, comprising a processor and a memory, wherein the memory is configured to store a computer program, and the processor is configured to invoke and run the computer program stored in the memory, to perform the method according to any one of claims 1 to 11.

24. A chip, comprising a processor, configured to invoke computer instructions from a memory and run the computer instructions, to cause a device in which the chip is installed to perform the method according to any one of claims 1 to 11.

25. A computer-readable storage medium, configured to store computer program instructions, wherein the computer program causes a computer to perform the method according to any one of claims 1 to 11.

26. A computer program product, comprising computer program instructions, wherein the computer program instructions cause a computer to perform the method according to any one of claims 1 to 11.

Communication system 100

FIG. 1

FIG. 2a

FIG. 2b

300

| Network device | | Terminal device |

S310: Correct M radio frequency channels based on first information obtained by a correction circuit

S320: Correct the M radio frequency channels based on second information obtained through air interface transmission

FIG. 3

400

S411-1

A value of a second quality parameter is greater than or equal to a value of a first quality parameter

Yes

S411-2

A difference obtained by subtracting the value of the first quality parameter from the value of the second quality parameter is greater than or equal to a first threshold

No

No

**Or**

S412

The value of the second quality parameter is greater than or equal to a second threshold

No

Yes

Yes

S420

Correct M radio frequency channels based on first information

S430

Correct the M radio frequency channels based on second information

FIG. 4

500

| Network device | | Terminal device |
|---|---|---|

S510: Correct M radio frequency channels based on first information obtained by a correction circuit

S520: Send first reference information →

← S530: Send first channel measurement information

**S540: Send second reference information** →

← **S550: Send second channel measurement information**

**S560: Send third reference information** →

← **S570: Send third channel measurement information**

**S580: Determine, based on a first quality parameter and/or a second quality parameter, to correct the M radio frequency channels based on second information**

FIG. 5

| Communication apparatus 600 |
|---|
| First correction unit 610 |
| Second correction unit 620 |
| Transceiver unit 630 |

FIG. 6

Communication apparatus 700

Processor 720

Memory 730

Transceiver 710

FIG. 7

## INTERNATIONAL SEARCH REPORT

| International application No. |
| --- |
| **PCT/CN2024/086538** |

| A. | CLASSIFICATION OF SUBJECT MATTER |
| --- | --- |

H04B 17/11(2015.01)i

According to International Patent Classification (IPC) or to both national classification and IPC

| B. | FIELDS SEARCHED |
| --- | --- |

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNABS: CNTXT; VEN; EPTXT; USTXT; WOTXT; CNKI: 硬件, 校准, 校正, 电路, 自校正, 内校正, 空口, 一致性, 通道, 相位, 幅度, 时延, 参考信号, 参考信息, 多个, channel, correction, calibrate, circuit, air interface, phase, delay, amplitude, error, difference, reference, signal, multiple

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 109782217 A (PLA AIR FORCE EARLY WARNING ACADEMY) 21 May 2019 (2019-05-21) description, paragraphs [0005]-[0043] and [0052]-[0174] | 1-5, 9-16, 20-26 |
| A | CN 110299950 A (ZTE CORP.) 01 October 2019 (2019-10-01) entire document | 1-26 |
| A | CN 115396049 A (DATANG MOBILE COMMUNICATIONS EQUIPMENT CO., LTD.) 25 November 2022 (2022-11-25) entire document | 1-26 |
| A | CN 115515153 A (HUAWEI TECHNOLOGIES CO., LTD.) 23 December 2022 (2022-12-23) entire document | 1-26 |
| A | CN 115865162 A (PURPLE MOUNTAIN LABORATORIES FOR NETWORK AND COMMUNICATION SECURITY) 28 March 2023 (2023-03-28) entire document | 1-26 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **27 June 2024** | **08 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/086538**

| Patent document cited in search report | | | Publication date (day/month/year) | Patent family member(s) | Publication date (day/month/year) |
|---|---|---|---|---|---|
| CN | 109782217 | A | 21 May 2019 | None | |
| CN | 110299950 | A | 01 October 2019 | None | |
| CN | 115396049 | A | 25 November 2022 | None | |
| CN | 115515153 | A | 23 December 2022 | None | |
| CN | 115865162 | A | 28 March 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310489386